# EUROPEAN PATENT APPLICATION

(11) **EP 1 777 538 A1**
(43) Date of publication of application: **25.04.2007**
(21) Application number: 06255171.8
(22) Date of filing: 06.10.2006
(51) Int. Cl.: G01S 1/00, G01S 5/00, G01S 5/10, G01S 5/14

(54) **Spacecraft position monitoring and control**

(30) Priority: 19.10.2005 US 253369
(71) Applicant: Lockheed Martin Corporation, Bethesda, Maryland 20817 (US)
(72) Inventor: Bay, FM, Sunnyvale California 94087 (US)
(74) Representative: Pratt, Richard Wilson

(57) **Abstract**

A method and system (10) provides integrity information from a spacecraft in a non-geostationary constellation (210) of spacecraft. A terrestrial source (204) is provided for generating and providing a position message (260) to a spacecraft (216) in the non-geostationary constellation. The position message causes the spacecraft (216) to generate and provide a response message (262) to the terrestrial source. The response message is processed in the terrestrial source to determine spacecraft position data. The spacecraft position data is then provided to the spacecraft and utilized by the spacecraft and other spacecraft in the constellation (210) to provided integrity information to a navigational aid.

## Description

### FIELD OF THE INVENTION

The present invention relates to spacecraft management. An embodiment relates to spacecraft position monitoring and control.

### BACKGROUND OF THE INVENTION

In the art of spacecraft management, communication links between a spacecraft and a terrestrial monitoring and control station (e.g. a ground control station located on the surface of the earth) may be used for exchanging information related to monitoring of the spacecraft's performance and/or for providing commands necessary for the proper operation of the spacecraft.

One example of where such a communication link is utilized, is satellite constellation position monitoring and correction in the Global Positioning System (GPS) satellite constellation. GPS is composed of a plurality of satellites orbiting the earth. Using a GPS receiver, a user of the GPS system is provided with location information relative to the earth's surface, e.g. typically in the form of latitude, longitude, and/or altitude information. To determine the location, GPS receivers utilize a triangulation technique, which typically requires that four orbiting GPS satellites be visible to the GPS receiver. In order for the location information to be accurate, an accurate position of the four satellites in their orbits relative to the earth must be known. In this regard, the greater the accuracy of the known satellite position, the greater the accuracy of the location provided to the user. Therefore, it is desirable to maintain accurate satellite position data as well as to detect any deviation from a desired orbital position.

In some instances, GPS satellites have the ability to provide an integrity indication along with the navigation information provided to the GPS receiver. Integrity refers to knowledge of the state of a navigation aid, such as a satellite, at the user level, e.g. the GPS receiver. In this manner the satellite may provide an error percentage, e.g. integrity indication, to the receiver so that the receiver has knowledge of, or has a level of confidence in, the navigation signal. Such integrity indications are based on the period of time that has passed since the internal position data of the satellite was updated by the ground station. In other words, if the position data was recently updated, the integrity indication would represent a smaller error in the navigation signal provided. Similarly, if the position data was not recently updated, the integrity indication would represent a potential increased amount of error as a function of the time that passed since the last update.

To reduce satellite dependency on ground control stations, newer generation satellites have been configured with an autonomous navigation capability wherein at periodic intervals, a satellite broadcasts its information, e.g. for instance a clock value and ephemerous data, to other proximate satellites. The receiving satellites utilize the broadcast data to determine their position relative to the broadcasting satellite. To broadcast and receive data such satellites are equipped with transmitters and receivers that establish a communication link referred to in the art as a satellite crosslink. Presently, through crosslinks, satellites can maintain an accurate determination of their position relative to each other; however, determination of their position relative to the earth's surface still requires a ground control segment such as that utilized by the GPS satellite constellation. Unfortunately, however, such ground control stations may only update a satellite for a short time, when the satellite is in view of the master control station, which typically occurs every twelve hours. During the interim period, however, any errors in a satellite's position are propagated throughout the constellation until an update occurs.

### SUMMARY OF THE INVENTION

Aspects of the invention are specified in the claims. The claims may be combined in combinations other than these explicitly set forth in the claims.

According to one aspect of the present invention, a method for updating position data in a non-geostationary constellation of spacecraft is provided. According to this aspect, the method includes generating, in a terrestrial source, a position message, and providing the position message to a first spacecraft. The position message causes the spacecraft to generate and provide a response message for the terrestrial source. In this regard, the method includes processing the response message in the terrestrial source to determine spacecraft position data and sending the spacecraft position data to the spacecraft.

According to the present method, the spacecraft position data may include at least one piece of navigational data from which internally stored position data in the spacecraft may be updated. Thus, a further step of the present method may include updating position data stored in the first spacecraft using the spacecraft position data provided by the terrestrial source. Such updating in turn may include correcting the internally stored position data or confirming the accuracy of the internally stored position data. For instance, in one example of the present method, the position data may include data indicative of the position of the spacecraft at the time the spacecraft provided the response message to the terrestrial source. In another example, the position data may include ephemeris data relating to the spacecraft (e.g. a list of positions or locations of the spacecraft as a function of time). In another example, the position data may include clock synchronization information for the spacecraft. In yet another example, the position data may include one or more combinations of the above set forth data.

The method may include determining in a second spacecraft of the non-geostationary constellation of spacecraft, second spacecraft position data that is based on the position of the first spacecraft, which includes the updated position data from the terrestrial source. In other words, the second spacecraft may determine its position based on the first spacecraft's position through a crosslink communication with the first spacecraft. Thereafter, the method may include providing a navigation message from the second spacecraft to a navigational aid, e.g. GPS receiver, wherein the navigation message includes an integrity indication. The integrity indication is based on the location of the second spacecraft relative to the first spacecraft at the time the navigation message is provided to the GPS receiver. The integrity indication is determined not only at the time the navigation message is sent, but is also based on the location of the second spacecraft relative to the first spacecraft, which has accurate position information as determined and provided to the first spacecraft by the terrestrial source.

In this regard, the method may further include the step of updating position data in other spacecraft in the constellation using the position data in the most recently updated spacecraft in the constellation. The method may include communicating position data between the most recently updated spacecraft and other spacecraft in the constellation to update internally stored position data in the other spacecraft. As the constellation orbits the earth, at least one of the spacecraft will be in view, e.g. in communication with, the terrestrial source so as to receive updated position data. Thereafter, that spacecraft may be utilized through crosslink communications to update the position data of other spacecraft in the constellation until another spacecraft receives updated position data from the terrestrial source, at which time the most recently updated spacecraft becomes the reference by which other spacecraft in the constellation update their position data.

The step of determining spacecraft position data may include iterative generation and providing of position messages to the spacecraft from the terrestrial source to cause the spacecraft to generate and provide a corresponding number of iterative response messages while the spacecraft is in view of the terrestrial source. Such response messages may be processed in the terrestrial source to determine the spacecraft position data, and as will be appreciated, may be particularly useful in determining ephemeris data relating to the spacecraft.

The position message(s) may be provided to the spacecraft over a first set of predetermined frequencies and the response message(s) may be received from the spacecraft over a second set of predetermined frequencies different from the first set of frequencies. Such dual frequency position message(s) and response message(s) may be utilized to compensate for atmospheric induced errors in the messages.

The step of providing the position message(s) may include providing a time tag in the position message(s) that is repeated in the response message(s) and utilized by the terrestrial source to determine position data relating to the spacecraft at the time the response message is provided.

In another aspect of the present invention, a system for updating position data in a non-geostationary constellation of spacecraft is provided. The system includes a processing system and an interface system in communication with the processing system. The processing system is configured to generate a position message for a spacecraft in the constellation and process a response message from the spacecraft to generate spacecraft position data for the spacecraft. The interface system is configured to provide the position message to the spacecraft, receive the response message from the spacecraft, and provide the spacecraft position data to the spacecraft.

The processing system and the interface system may be positioned on the surface of the earth in the same geographic location. The processing system and the interface system may be positioned on the surface of the earth in separate geographic locations and are linked by a communications network.

The system may comprise at least one base station configured to provide the position message to a spacecraft known to be in view of the at least one base station. The system may comprise a plurality of base stations and may be configured to provide position messages to a spacecraft known to be simultaneously in view of the plurality of base stations. In at least one embodiment the system may include four base stations that are configured to provide position messages to a spacecraft known to be simultaneously in view of the four base stations.

In this regard, one or more base stations may be configured to receive the response message from the spacecraft and provide information relating to the received response message to a predetermined one of the one or more base stations. The predetermined one of the one or more base stations may in turn, be configured to determine position data for the spacecraft using a three dimensional position determination methodology, e.g. multilateration.

In another aspect of the present invention, a method for providing navigation information from a spacecraft in a non-geostationary constellation of spacecraft is provided. According to this aspect, the method includes receiving updated position data in a spacecraft of the non-geostationary constellation of spacecraft. Thereafter, the method includes determining in a second spacecraft of the non-geostationary constellation of spacecraft, second spacecraft position data based on the updated position data received in the first spacecraft. Thereafter, the method may include providing a navigation message to a navigation aid, e.g. a GPS receiver, from the second spacecraft, wherein the navigation message includes a first integrity indication based on the location of the second spacecraft relative to the first spacecraft when the navigation message is provided.

An embodiment of the present invention improves spacecraft management and control. Another embodiment of the present invention improves spacecraft position data maintenance and accuracy. Another embodiment improves the reliability of a predicted state of a spacecraft's position. Another embodiment of the present invention reduces error propagation in a constellation of spacecraft.

### BRIEF DESCRIPTION OF THE DRAWINGS

FIG. 1 illustrates one example of a system for updating position data in a non-geostationary constellation of spacecraft;
FIG. 2 illustrates another example of a system for updating position data in a non-geostationary constellation of spacecraft;
FIG. 3 illustrates another example of a system for updating position data in a non-geostationary constellation of spacecraft; and
FIG. 4 illustrates another example of a system for updating position data in a non-geostationary constellation of spacecraft.

### DETAILED DESCRIPTION

Reference will now be made to the accompanying drawings, which at least assist in illustrating the various pertinent features of the present invention. In this regard, the following description is presented for purposes of illustration and description and is not intended to limit the invention to the form disclosed herein. Consequently, variations and modifications commensurate with the following teachings, and skill and knowledge of the relevant art, are within the scope of the present invention. The embodiments described herein are further intended to enable others skilled in the art to utilize the invention in such, or other embodiments, and with various modifications required by the particular application(s) or use(s) of the present invention.

While the principles of the present invention are applicable to any environment wherein it is desirable to maintain accurate position data with respect to one or more spacecraft or airborne vehicles, at least one application of the present invention is in navigation systems employing a constellation of several spacecraft, such as GPS. An embodiment of the invention provides a terrestrial source of truth, from which, at least one satellite's position relative to the earth is accurately determined and maintained at the satellite level. This in turn permits that satellite's position information to be utilized by other satellites in the constellation as a reference for maintaining the accuracy of their own internal position data. Accordingly, in the context of the present disclosure, the satellite having the updated position information from the terrestrial source of truth may be referred to herein as a "reference satellite." Furthermore, the reference satellite may be utilized by the other satellites in the constellation to determine an amount of error present in their internal position information based on their position relative to the reference satellite. Such error determinations may be provided as integrity indications in the navigation signals provided by the satellites to navigation aids, such as a GPS receiver. Advantageously, the integrity indications of the present invention are provided in real time. In other words, they are based on a satellite's present position relative to the reference satellite, which in turn has updated position information, at the time the navigation message is provided.

In this regard, the determination of a satellite's position relative to the reference satellite, which has updated position information, will contain a predeterminable amount of error, which in turn is representative of the integrity. Thus, it will be appreciated that a satellite in direct communication with the reference satellite will have a first predeterminable amount of error, while a satellite that is once removed, e.g. in communication with the reference satellite via another satellite in the constellation, will have a second predeterminable amount of error that is different than the first amount of error. In this manner, each satellite within the constellation maintains real time knowledge of an error in its internal position information based on its position relative to the reference satellite, e.g. in direct communication versus once removed, twice removed, etc. This in turn allows satellites being utilized for navigation, such as by a GPS receiver, to provide a real time integrity indication to the receiver so that the receiver has a level of confidence in the navigation signal.

Updating position data in at least one satellite from a terrestrial source, and thereafter using the updated satellite to update position data in other satellites within a constellation, prevents systemic errors, such as for example, those occurring during satellite-to-satellite assessments in a constellation, from being propagated across the constellation. In other words, the propagation of errors through the constellation may be minimized through corrections provided by the terrestrial control. In the context of a GPS system, this improves the accuracy of the navigation information provided to the receiver by increasing the reliability of the known state of each satellite's internal position information.

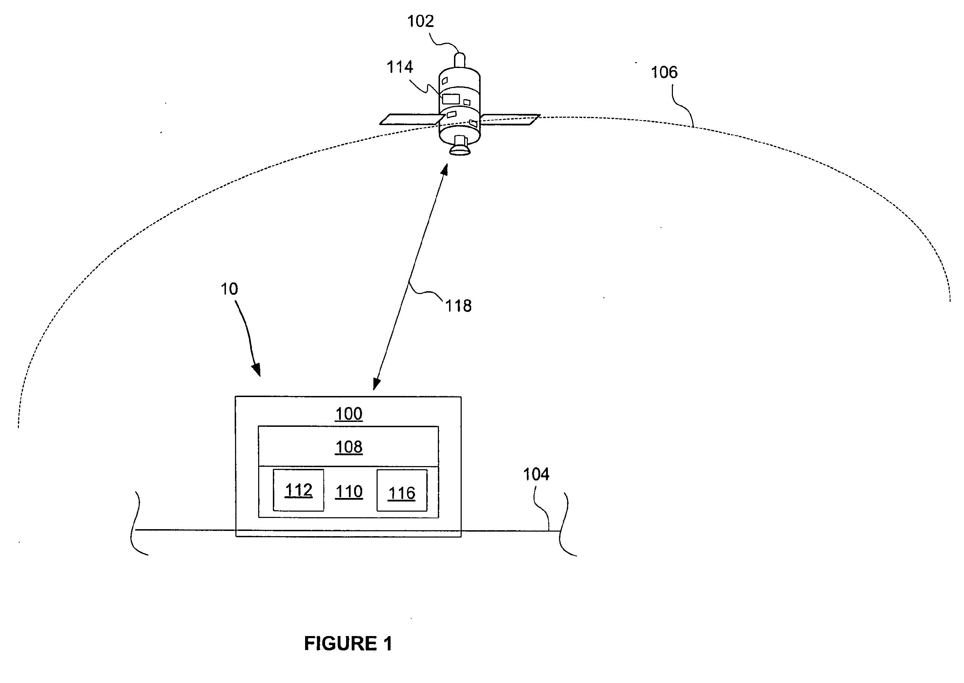

Referring to FIG. 1 there is shown one embodiment of a system 10 for updating position data in a non-geostationary constellation of spacecraft. The system 10 includes at least one ground system 100 located on the earth's surface 104 and a non-geostationary satellite 102 in an orbital path 106 around the earth. The ground system 100 may be any device or group of devices configured to determine position data relating to the satellite 102 and provide the position data to the satellite 102 so that the satellite 102 may update its own internal position data and/or tracking mechanism.

In one example the ground system 100 may include a processing system 110 and an interface system 108. The processing system 110 may include one or more processors that are configured to generate an initial position message 112 for the satellite 102. The initial position message 112 is configured to cause the satellite 102 to generate and provide a corresponding response message 114 for the ground system 100. The processing system 110 may be configured to process the response message from the satellite 102 to calculate position data for the satellite 102, and generate a satellite position message 116 for the satellite 102 that includes the determined satellite position data. The initial position message 112, the response message 114, and the satellite position message 116 are transmitted between the ground system 100 and the satellite 102 via a communication link 118, e.g. a Radio Frequency (RF) link.

The satellite position data may include any data relating to a position of the satellite 102 that may be utilized by the satellite 102 to update its own internal position data and/or tracking mechanism. For instance, the position data may include data indicative of the position of the satellite 102 at the time the satellite 102 provided the response message to the ground system 100. In another example, the position data may include ephemeris data relating to the satellite 102 (e.g. a list of positions or locations of the satellite 102 as a function of time). In another example, the position data may include clock synchronization information for the satellite 102. In yet another example, the position data may include one or more combinations of the above set forth data.

According to the present example, the satellite 102 may be configured to receive the initial position message 116 from the ground system 100 and process the initial position message 112 to generate and provide the response message 114 to the ground system 100. In this regard, the satellite 102 may further be configured to receive the satellite position message 116 from the ground system 100 and process the satellite position message 116 to update its internally stored position data and/or tracking mechanism, using the position data provided in the satellite position message 116.

The interface system 108, on the other hand, may be any device or group of devices configured to provide the initial position message 112 to the satellite 102, receive the response message 114 from the satellite 102, and provide the satellite position message 116 to the satellite 102.

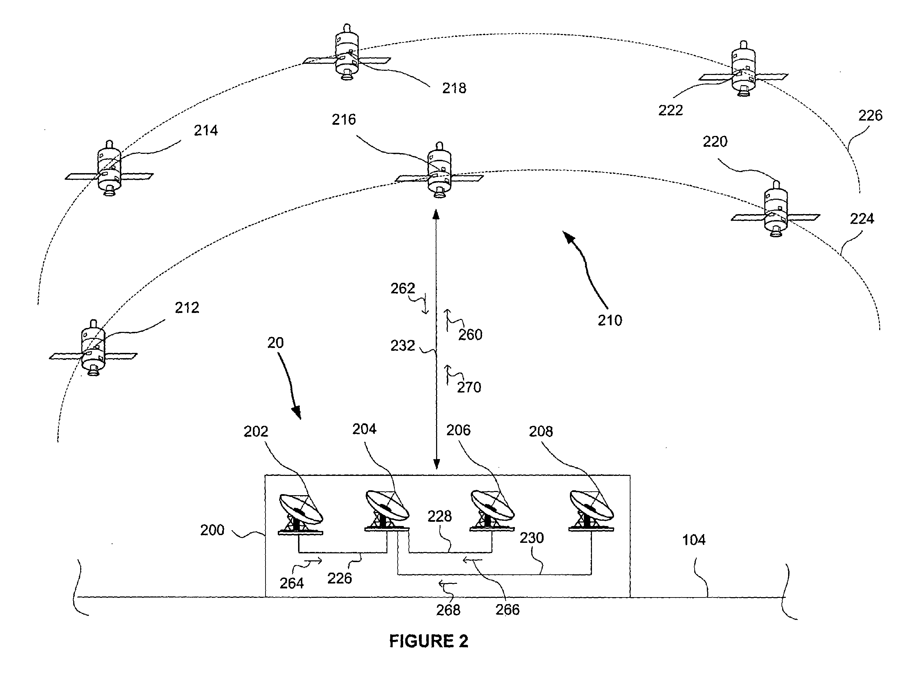

Referring to FIG. 2, there is illustrated another embodiment of a system 20 for updating position data in a non-geostationary constellation of spacecraft. The system of FIG. 2 includes a ground system 200 and a non-geostationary satellite constellation 210. The ground system 200 includes a plurality of ground stations 202, 204, 206, and 208, each located on the earth's surface 104, (collectively referred to herein as ground stations 202-208). The non-geostationary satellite constellation 210 in turn, includes a plurality of satellites, as exemplified by satellites 214, 218, and 222 in a first orbit 226 and satellites 212, 216, and 220 in a second orbit 224 around the earth, (collectively referred to herein as satellites 212-222).

In one example according to this embodiment, the ground system 200 may utilize multilateration techniques to generate the position data for a respective one of the satellites in the constellation 210. As will be appreciated, multilateration utilizes four or more sensor inputs to compute three dimensional position data for an object of concern, such as for example, the satellite 216. Alternatively, it will be appreciated, that the ground system 200 may utilize other methodologies to determine position data for a desired satellite, such as the satellite 216, with some examples including radar and radio frequency tracking applications.

In the illustrated example, the ground system 200 includes four ground stations 202-208. The ground stations 202-208 are each interconnected by communication links 226, 228, and 230 to the ground station 204, which for illustrative purposes may be referred to herein as a "master ground station" 204. The communication links 226, 228, and 230 between the master ground station 204 and the ground stations 202, 206, and 208 may be wireless communication links or wireline communication links. In the present context, a wireless communication link may be any link wherein information is transferred over an air interface, while a wireline communication link may be any link wherein information is transferred over a solid medium, such as a cable.

The ground stations 202-208 may be located in proximity to one another or may be located at geographically diverse locations, so long as they are positioned so that a satellite of interest, such as satellite 216, is simultaneously in view of each of the ground stations 202-208. It will be appreciated, in this regard, that multilateration utilizes the Time Difference Of Arrival (TDOA) of a signal received by a respective set of sensors, in this case the ground stations 202-208, to calculate the position of a transmitting device, in this case one of the satellites of the constellation 210. Thus, locating the ground stations 202-208 such that they may substantially simultaneously communicate with one of the satellites 212-222 provides a common frame of reference from which the location of a satellite, such as 216, may be determined as it passes in view of the ground system 200. It will be appreciated that while three dimensional position determination utilizing multilateration requires a minimum of four sensors, e.g. ground stations 202-208, the ground system 200 may include fewer or more ground stations as a function of the type of position determination methodology employed and accuracy of the calculated position data desired.

In its operation as the master ground station, the ground station 204 is configured to generate an initial position message 260 when a desired satellite (e.g. satellite 216) passes in view of the ground system 200, typically every twelve hours during its orbit of the earth. The initial position message 260 may be provided to the satellite 216 via a wireless Radio Frequency ("RF") communication link 232. For instance, the position message 260 may utilize digital encoding "spread spectrum" RF techniques, such as Code Division Multiple Access (CDMA). It will be appreciated that the initial position message 260 may be transmitted using a single frequency. Variations in the phase due to ionospheric effects, however, can severely affect transmissions such that in a preferred example, the master ground station 204 provides the initial position message 260 over at least two predetermined frequencies, such that ionospheric corrections may be made.

Upon receiving the initial position message 260, the satellite 216 processes the message 260 and generates a response message 262 for the ground system 200. As with the initial position message 260 the response message 262 may utilize digital encoding "spread spectrum" RF techniques, such as CDMA. Furthermore, for the same reasons noted above, the response message 262 is preferably transmitted to the ground system 200 over another set of at least two predetermined frequencies. As will be appreciated, the dual frequency position message 260 and response message 262 may be utilized to determine atmospheric induced delays according to conventional methodology.

According to the present example, the ground stations 202-208 may each include a CDMA receiver for receiving the response message 262 from the satellite 216. Upon receiving the response message 262, the ground stations 202, 206, and 208, in turn, provide a message (e.g. messages 264, 266 and 268 respectively) to the master ground station 204 that includes information relating to the response message 262. For instance, the ground stations 202, 206, and 208 may each provide measurement data relating to the time of arrival of the response message 262 from the satellite 216. Such data is in turn processed in the master ground station 204 to determine position data relating to the satellite 216. For instance, where four ground stations 202-208 are utilized, three dimensional position data may be calculated by solving for the mathematical intersection of multiple hyperbolas (or hyperboloids) based on the TDOA between the signal receptions at the multiple ground stations 202-208. As will be appreciated, a hyperboloid is a surface, e.g. the earth 104, which has a constant distance difference from two points, in this case, any two of the ground stations 202-208. Thus, using three hyperbolas (four ground stations 202-208) three dimensional position data for the satellite 216 is determinable by the master ground station 204.

It will be appreciated that the present example requires knowledge of the time at which the response message 262 is provided by the satellite 216. Thus, the time information may be included in the response message 262 by the satellite 216. Alternatively, however, a time tag may be provided in the position message 260. The time tag may in turn be repeated in the response message 262 such that the position of the satellite 216, at the time the response message 262 was transmitted, may be calculated. Advantageously, according to the latter example, a common time reference, e.g. the master ground station clock, is utilized in all position calculations.

Upon calculating the position of the satellite 216, the master ground station 204 generates and provides a satellite position message 270 to the satellite 216. As noted above, the satellite position message 270 includes the calculated position data. Preferably, however, the position message 270 also includes clock synchronization information for updating and synchronizing of the satellite clock with the ground system 200. In this regard, the satellite 216 processes the satellite position message 270 and updates its internal clock and internal position data using the position data, e.g. by recalculating internally stored ephemeris data using the provided position data as a reference.

It should be noted, that since the satellite 216 continues to progress through its orbit 224, the calculated position of the satellite 216 is only correct at the time when the response message 262 is provided. Thus, in a further aspect of the present protocol, the position message 260 may be repeated a predetermined number of times while the satellite 216, is in view of the ground system 200. This in turn results in repeated response messages 262 from the satellite 216, which may be utilized to calculate ephemeris data for the satellite 216, e.g. spatial coordinates of the satellite 216 associated with the displacement through its orbit 224 relative to the ground system 200. In other words, the master ground station 204 may generate a steady state prediction of the location of the satellite 216 through its orbit 224 and provide the same to the satellite 216 in the satellite position message 270. Such information may in turn be utilized by the satellite 216 for updating its stored position data and/or tracking mechanism, e.g. its Kalman Filtering Algorithm. Thus, rather than recalculation of ephemeris data in the satellite 216 using a past position of the satellite 216 as a reference, the master ground station 204 may calculate precise and accurate ephemeris data and provide the same to the satellite 216.

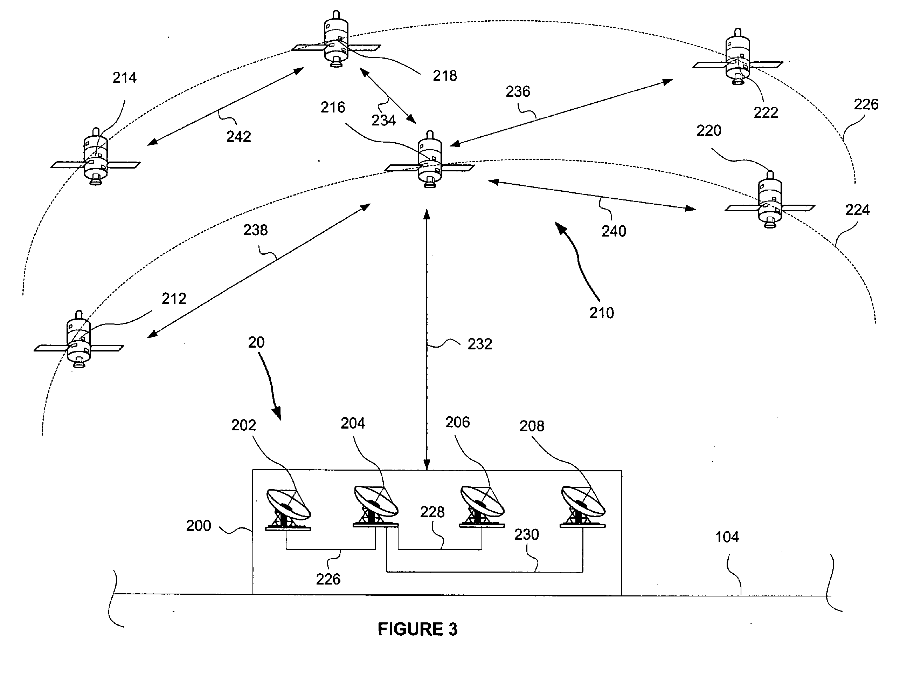

Referring to FIG. 3, in another example of a system 20 for updating position data in a non-geostationary constellation of spacecraft, the satellite 216 may not only utilize the position data to update its own internal position data, but may also serve as a reference for other satellites in the constellation 210. According to one aspect, the satellite 216 may serve as a reference through which other satellites in the constellation 210 may update their internal position data and/or tracking mechanisms. In other words, once updated with accurate position data, the satellite 216 may serve as a reference by which neighboring satellites, e.g. 212, 214 and 218-222 may determine errors in their own position data and correct those errors. According to another aspect, the satellite 216 may serve as a reference through which the satellites, e.g. 212, 214 and 218-222 may determine and provide integrity messages to a navigation aid such as a GPS receiver, in conjunction with providing navigation messages

The satellite 216 may communicate over communication links 234, 236, 238, and 240, referred to in the art as a crosslink (as indicated by the arrows on FIG. 3) with any other satellite that is in view of the reference satellite 216 (in this case, satellites 212, 218, 220, and 222). Through crosslink communication, the satellites 212, 218, 220, and 222 may maintain highly accurate determinations of their positions relative to one another. Thus, if as in the present case, accurate position data is maintained in at least one satellite, e.g. 216, within the constellation 210, then the position of other satellites, e.g. 212, 218, 220, and 222, within the constellation 210, may be determined with reference to the known position of the reference satellite 216.

Typically, for inter-satellite communications, a broadcast period is defined and each satellite broadcasts during an assigned portion of the period. A receiving satellite can determine the identity of a broadcasting satellite simply by noting the time of the broadcast. This method, while not the only method of determining a broadcasting satellite's identity, is referred to as Time Division Multiplexing (TDM). The range between satellites, e.g. 216 and 218, may be determined by noting the elapsed time between a transmission from the broadcasting satellite 216 and reception by the receiving satellite 218 and then multiplying that time by the speed of propagation, nominally the speed of light. In this regard, the reference satellite 216 preferably communicates with at least two satellites that are in the same plane or orbit, e.g. satellites 212 and 220, and two satellites that are in a different plane or orbit, e.g. satellites 218 and 222, such that a collaborative reference frame is maintained relative to the satellite 216. In other words, the reference satellite 216 serves as reference for each of the satellites, e.g. 212, 218, 220 and 222, in communication with the reference satellite 216, by which errors in the internal position data of the satellites 212, 218, 220, and 222 may be minimized.

Similarly, satellites, such as satellite 214, that are not within view of the reference satellite 216 may utilize the position data in the reference satellite 216 indirectly. In this case, a satellite, such as 214, that is out of view of the reference satellite 216 may receive position data via crosslink 242 from one of the previously updated satellites 218, which serves as a reference for the satellite 214, which is not in direct communication with the reference satellite 216. In this manner, a hierarchical structure utilizable to ascertain the amount of error in a satellite's position data based on that satellite's position relative to the reference satellite 216 may be maintained. In other words, the error in a satellite's position data is predeterminable based on how many positions or satellites removed a satellite is from the reference satellite 216.

In this regard, upon being contacted by a GPS receiver for navigation/location information, the satellites 212-222 may provide integrity information to the GPS receiver along with the navigation/location information. Further, in this regard, the reference satellite within the constellation 210 may continually change as the individual satellites pass in view of the ground system 200. In other words, the ground system 200 may continually track and update each of the satellites 212-222 as they individually pass in view of the system 200 such that each time a satellite's position data is updated that satellite becomes the reference satellite through which the other satellites including the previous reference satellite maintain position and integrity information. Advantageously, it will be appreciated that the present method provides integrity information based on where a satellite is presently located, e.g. its position relative to a reference satellite having updated position information.

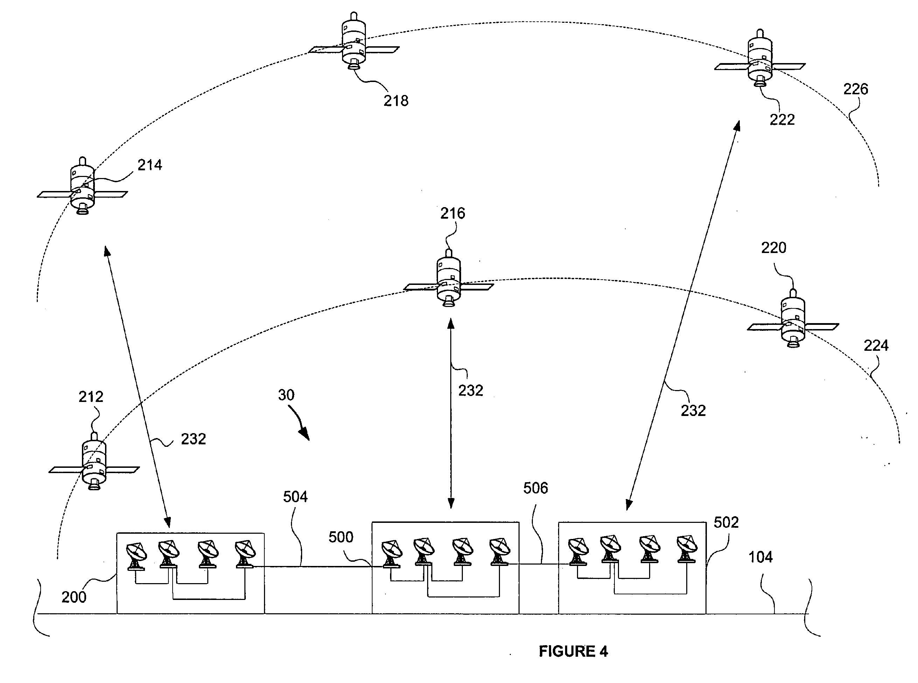

Referring to FIG. 4, according to another example of a system 30 for updating position data in a non-geostationary constellation of spacecraft, additional ground systems, 500 and 502, etc., may be utilized to provide additional reference satellites, e.g. 214 and 222, within the satellite constellation 210. Each reference satellite, e.g. 214, 216, and 222, may then in turn be utilized to update position data in other satellites within the constellation 210. Individually, each of the ground systems 200, 500, and 502 may operate in a similar manner to the above-described operation of the ground system 200, e.g. communication with the satellites 214, 216, and 222 via a communication link such as communication link 232. The ground systems 200, 500 and 502, however, are interconnected via communication links, 504 and 506, such that the master ground stations of each ground system 200, 500 and 502 may maintain a precise coordinated reference time to prevent a clock synchronization conflict in the constellation 210. According to this example, the exact number of ground systems utilized is a function of the number of satellites within the constellation 210 and the desired integrity of those satellites. In other words, the ground systems, e.g. 200, 500 and 502, each provide a reference satellite, e.g. 214, 216, and 222, by which neighboring satellites in the constellation 210 may update their position data. Thus, any one satellite in the constellation 210 is not very far removed from one of the reference satellites 214, 216, and 222. In this regard, the number of ground systems provided may be such that any one satellite within the constellation 210 is no more than twice removed, e.g. in direct communication with a satellite that is in direct communication with a reference satellite. Alternatively, it may be desirable to provide enough ground systems to prevent any one satellite from being more than once removed from a reference satellite, e.g. each satellite in the constellation 210 is either a reference satellite or in direct communication with a reference satellite.

Those skilled in the art will appreciate variations of the above-described embodiments that fall within the scope of the invention. As a result, the invention is not limited to the specific examples and illustrations discussed above, but only by the following claims and their equivalents.

## Claims

1. A method for updating position data in a non-geostationary constellation of spacecraft, the method comprising:
generating a position message in a terrestrial source;
providing the position message to a first spacecraft to cause the first spacecraft to generate and provide a response message to the terrestrial source;
processing the response message in the terrestrial source to determine spacecraft position data;
sending the spacecraft position data to the first spacecraft;
determining a location of a second spacecraft relative to the first spacecraft; and
providing a navigation message to a navigational aid from the second spacecraft, wherein the navigation message includes an integrity indication based on the location of the second spacecraft relative to the first spacecraft when the navigation message is provided.

2. The method of Claim 1 further comprising:
repeating the steps of generating and providing position messages a predetermined number of times to cause the spacecraft to generate and provide a corresponding number of response messages; and
processing the corresponding number of response messages in the terrestrial source to determine the spacecraft position data.

3. The method of Claim 1 wherein the step of providing the position message includes:
including a time tag in the position message to cause the spacecraft to include a time tag in the response message.

4. The method of Claim 1 wherein the step of providing the position message comprises:
providing the position message from at least one ground station to a spacecraft known to be in view of the at least one ground station.

5. The method of Claim 1 wherein the step of providing the position message includes:
providing the position message from at least one ground station to a spacecraft known to be in view of a plurality of ground stations including the at least one ground station.

6. The method of Claim 1 wherein the spacecraft position data includes:
ephemeris data relating to the spacecraft.

7. The method of Claim 1 further comprising:
updating position data stored in the spacecraft using the spacecraft position data.

8. The method of Claim 1 further comprising:
updating position data stored in at least one other spacecraft in the constellation using the spacecraft position data.

9. The method of Claim 1 further comprising:
updating position data stored in a plurality of other spacecraft in the constellation using the spacecraft position data.

10. The method of Claim 1 wherein the spacecraft position data includes clock synchronization information for the spacecraft.

11. The method of Claim 1 wherein the step of providing the position message includes:
providing the position message over a first set of predetermined frequencies.

12. The method of Claim 11 further comprising:
generating the response message in the spacecraft and transmitting the response message over a second set of predetermined frequencies different from the first set of predetermined frequencies.

13. A system for updating position data in a non-geostationary constellation of spacecraft, the station comprising:
a processing system operable to generate a position message for a spacecraft in the constellation, receive a response message from the spacecraft, and process the response message to generate spacecraft position data for the spacecraft; and
an interface system in communication with the processing system and operable to provide the position message to the spacecraft, receive the response message from the spacecraft and provide the spacecraft position data to the spacecraft.

14. The system of Claim 13 wherein the processing system is configured to generate a plurality of position messages for the spacecraft and process a corresponding plurality of response messages from the spacecraft to generate the spacecraft position data.

15. The system of Claim 13 wherein the position message and corresponding response message include a time tag.

16. The system of Claim 13 wherein the spacecraft position data includes ephemeris information relating to the spacecraft.

17. The system of Claim 13 wherein the spacecraft position data includes clock synchronization information for the spacecraft.

18. The system of Claim 13 wherein the interface system is configured to provide the position message over a first set of predetermined frequencies and receive the response message over a second set of predetermined frequencies different from the first set of predetermined frequencies.

19. A method for providing navigation information from a spacecraft in a non-geostationary constellation of spacecraft, the method comprising:
receiving first updated position data in a first spacecraft of the non-geostationary constellation of spacecraft;
determining in a second spacecraft of the non-geostationary constellation of spacecraft, second updated position data based on the first updated position data received in the first spacecraft; and
providing a navigation message to a navigation aid from the second spacecraft, wherein the navigation message includes a first integrity indication based on the location of the second spacecraft relative to the first spacecraft when the navigation message is provided.

20. The method of Claim 19, wherein the receiving step comprises:
receiving the first updated position data in the first spacecraft from a terrestrial source.

21. The method of Claim 19 further comprising:
receiving, from the terrestrial source, third updated position data in a third spacecraft of the non-geostationary constellation.

22. The method of Claim 21 further comprising:
determining in the second spacecraft, the second updated position data based on the third updated position data received in the third spacecraft and determining in the first spacecraft, the first updated position data based on the third updated position data received in the third spacecraft.

23. The method of Claim 22 further comprising:
providing a navigation message to the navigation aid from the second spacecraft, wherein the navigation message includes a second integrity indication based on the location of the second spacecraft relative to the third spacecraft when the navigation message is provided.
